(19) Europäisches Patentamt / European Patent Office / Office européen des brevets

(11) **EP 3 121 242 B1**

(12) **EUROPEAN PATENT SPECIFICATION**

(45) Date of publication and mention of the grant of the patent:
**08.05.2019 Bulletin 2019/19**

(21) Application number: **15765667.9**

(22) Date of filing: **17.03.2015**

(51) Int Cl.:
***C09K 5/04*** *(2006.01)*       ***F25B 1/00*** *(2006.01)*

(86) International application number:
**PCT/JP2015/057903**

(87) International publication number:
**WO 2015/141678 (24.09.2015 Gazette 2015/38)**

(54) **WORKING FLUID FOR HEAT CYCLE, COMPOSITION FOR HEAT-CYCLE SYSTEMS, AND HEAT-CYCLE SYSTEM**

ARBEITSFLÜSSIGKEIT FÜR WÄRMEKREISLAUF, ZUSAMMENSETZUNG FÜR WÄRMEKREISLAUFSYSTEME UND WÄRMEKREISLAUFSYSTEM

FLUIDE DE TRAVAIL POUR CYCLE THERMIQUE, COMPOSITION POUR SYSTÈME DE CYCLE THERMIQUE, ET SYSTÈME DE CYCLE THERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.03.2014 JP 2014055604**

(43) Date of publication of application:
**25.01.2017 Bulletin 2017/04**

(73) Proprietor: **AGC Inc.**
**Tokyo 100-8405 (JP)**

(72) Inventor: **FUKUSHIMA, Masato**
**Tokyo 100-8405 (JP)**

(74) Representative: **Müller-Boré & Partner**
**Patentanwälte PartG mbB**
**Friedenheimer Brücke 21**
**80639 München (DE)**

(56) References cited:
**WO-A1-2012/157764        WO-A1-2014/178352**
**WO-A1-2014/178353        JP-A- 2012 505 296**
**US-A1- 2011 252 801       US-A1- 2011 253 927**

**Description**

The present invention related to a working fluid for heat cycle, a composition for a heat cycle system comprising the working fluid, and a heat cycle system employing the composition.

Heretofore, as a working fluid such as a refrigerant for a refrigerator, a refrigerant for an air-conditioning apparatus, a working fluid for a power generation system (such as exhaust heat recovery power generation), a working fluid for a latent heat transport apparatus (such as a heat pipe) or a secondary cooling fluid, a chlorofluorocarbon (CFC) such as chlorotrifluoromethane or dichlorodifluoromethane or a hydrochlorofluorocarbon (HCFC) such as chlorodifluoromethane has been used. However, influences of CFCs and HCFCs over the ozone layer in the stratosphere have been pointed out, and their use is regulated at present.

In this specification, abbreviated names of halogenated hydrocarbon compounds are described in brackets after the compound names, and the abbreviated names are employed instead of the compound names as the case requires.

Under these circumstances, as a working fluid for heat cycle, a hydrofluorocarbon (HFC) which has less influence over the ozone layer, such as difluoromethane (HFC-32), tetrafluoroethane or pentafluoroethane (HFC-125) has been used, instead of CFCs and HCFCs. For example, R410A (a mixed fluid of HFC-32 and HFC-125 in a mass ratio of 1:1) is a refrigerant which has been widely used. However, it is pointed out that HFCs may cause global warming. Accordingly, development of a working fluid for heat cycle which has less influence over the ozone layer and has a low global warming potential and which can replace R410A, is an urgent need.

Under these circumstances, in recent years, a hydrofluoroolefin (HFO), that is, a HFC having a carbon-carbon double bond, which is a compound having less influence over the ozone layer and having less influence over global warming, is expected, since the carbon-carbon double bond is likely to be decomposed by OH radicals in the air. In this specification, unless otherwise specified, a saturated HFC is represented as a HFC and is distinguished from a HFO.

As a HFO to be used for the working fluid for heat cycle, Patent Document 1 proposes 3,3,3-trifluoropropene (HFO-1243zf), 1,3,3,3-tetrafluoropropene (HFO-1234ze), 2-fluoropropene (HFO-1261yf), 2,3,3,3-tetrafluoropropene (HFO-1234yf) and 1,1,2-trifluoropropene (HFO-1243yc). Further, Patent Document 2 discloses 1,2,3,3,3-pentafluoropropene (HFO-1225ye), trans-1,3,3,3-tetrafluoropropene (HFO-1234ze(E)), cis-1,3,3,3-tetrafluoropropene (HFO-1234ze(Z)), HFO-1234yf and the like.

However, the HFOs disclosed in Patent Document 1 are insufficient in the refrigerating capacity of the cycle performance, and among them, one having a low proportion of fluorine atoms has combustibility. Further, the HFOs disclosed in Patent Document 2 are also insufficient in the refrigerating capacity of the cycle performance. Here, the cycle performance is evaluated by the refrigerating capacity and the coefficient of performance.

Accordingly, as a working fluid excellent in the cycle performance, a composition comprising trifluoroethylene (HFO-1123) has been proposed (for example, Patent Document 3). Patent Document 3 discloses an attempt to obtain a working fluid comprising HFO-1123 and various HFCs or HFOs in combination for the purpose of increasing the flame retardancy, the cycle performance, etc. of the working fluid.

However, the working fluid for heat cycle disclosed in Patent Document 3 has not yet been fully satisfactory in view of the balance of various properties such as the refrigerating capacity, the efficiency, the temperature glide and the discharge temperature.

For example, if the compressor discharge gas temperature (hereinafter sometimes referred to as the discharge temperature) is high, the heat resistance of materials constituting the compressor, a refrigerant oil usually contained in the composition for a heat cycle system together with the working fluid, an organic compound and the like may be influenced. Further, if the temperature glide is large when the working fluid for heat cycle is applied to a refrigerating cycle, it tends to be difficult to obtain a heat cycle system with a good energy efficiency.

Accordingly, a working fluid for heat cycle, which contains a HFO having less influence over global warming, and which has a sufficiently low discharge temperature, a small temperature glide and high cycle performance (refrigerating capacity and coefficient of performance) has been desired.

Patent Document 1: JP-A-04-110388
Patent Document 2: JP-A-2006-512426
Patent Document 3: WO2012/157764

It is an object of the present invention to provide a working fluid which has less influence over the ozone layer and less influence over global warming, which has a sufficiently low discharge temperature and a small temperature glide, and with which heat cycle excellent in the cycle performance (refrigerating capacity and coefficient of performance) can be obtained, a composition for a heat cycle system comprising such a working fluid, and a heat cycle system employing the composition.

The present invention provides the following working fluid for heat cycle, composition for a heat cycle system, and heat cycle system.

[1] A working fluid for heat cycle, which contains HFO-1123 and 1,2-difluoroethylene (HFO-1132), wherein the proportion of HFO-1132 based on the entire amount of the working fluid for heat cycle is at least 10 mass%.

[2] The working fluid for heat cycle according to [1], wherein the proportion of the total amount of HFO-1123 and HFO-1132 based on the entire amount of the working fluid for heat cycle is at least 20 mass% and at most 100 mass%.

[3] The working fluid for heat cycle according to [1] or [2], wherein the proportion of HFO-1123 based on the entire amount of the working fluid for heat cycle is at least 57 mass% and at most 90 mass%.

[4] The working fluid for heat cycle according to any one of [1] to [3], wherein the proportion of HFO-1132 based on the entire amount of the working fluid for heat cycle is at most 43 mass%.

[5] The working fluid for heat cycle according to any one of [1] to [4], which further contains HFC-32.

[6] The working fluid for heat cycle according to [5], wherein the proportion of HFC-32 based on the entire amount of the working fluid for heat cycle is at least 10 mass% and at most 60 mass%.

[7] The working fluid for heat cycle according to any one of [1] to [4], which further contains HFC-125.

[8] The working fluid for heat cycle according to [7], wherein the proportion of HFC-125 based on the entire amount of the working fluid for heat cycle is at least 15 mass% and at most 60 mass%.

[9] The working fluid for heat cycle according to any one of [1] to [4], which further contains HFC-32 and HFC-125.

[10] The working fluid for heat cycle according to [9], wherein the proportion of the total amount of HFC-32 and HFC-125 based on the entire amount of the working fluid for heat cycle is at least 35 mass% and at most 60 mass%.

[11] A composition for a heat cycle system, which comprises the working fluid for heat cycle as defined in any one of [1] to [10], and a refrigerant oil.

[12] A heat cycle system, which employs the composition for a heat cycle system as defined in [11].

[13] The heat cycle system according to [12], which is a refrigerating apparatus, an air-conditioning apparatus, a power generation system, a heat transport apparatus or a secondary cooling machine.

[14] The heat cycle system according to [13], which is a room air-conditioner, a store package air-conditioner, a building package air-conditioner, a plant package air-conditioner, a gas engine heat pump, a train air-conditioning system, an automobile air-conditioning system, a built-in showcase, a separate showcase, an industrial fridge freezer, an ice making machine or a vending machine.

The working fluid for heat cycle and the composition for a heat cycle system of the present invention have a small temperature glide when applied to a heat cycle, have a sufficiently low discharge temperature, and are excellent in the cycle performance (refrigerating capacity and coefficient of performance). Further, they have less influence over the ozone layer and less influence over global warming.

Further, the heat cycle system of the present invention, which employs the working fluid for heat cycle of the present invention, has less influence over global warming, has high durability and is excellent in the cycle performance, and accordingly the system can be downsized with it. Further, since it is excellent in the energy efficiency, reduction in electrical power consumption can be achieved.

Fig. 1 is a schematic construction view illustrating an example of a refrigerating cycle system.

Fig. 2 is a cycle diagram illustrating the state change of a working fluid for heat cycle in a refrigerating cycle system on a pressure-enthalpy diagram.

Now, the present invention will be described in detail below.

[Working fluid for heat cycle]

The working fluid for heat cycle of the present invention (hereinafter sometimes referred to as a working fluid) is a working fluid containing HFO-1123 and HFO-1132.

As HFO-1132, there are two stereoisomers of trans-1,2-difluoroethylene (HFO-1132(E)) and cis-1,2-difluoroethylene (HFO-1132(Z)). In the present invention, as HFO-1132, HFO-1132(E) or HFO-1132(Z) may be used alone, or a mixture of HFO-1132(E) and HFO-1132(Z) may be used. Particularly preferred is HFO-1132(E).

The working fluid of the present invention may further contain at least one of HFC-32 and HFC-125.

Both HFO-1123 and HFO-1132 contained in the working fluid of the present invention are HFOs having a carbon-carbon double bond which is likely to be decomposed by OH radicals in the air, and accordingly the working fluid of the present invention has less influence over the ozone layer and has less influence over global warming.

Specifically, the working fluid of the present invention has a sufficiently low global warming potential (hereinafter referred to as GWP) (100 years) in Intergovernmental Panel on Climate Change (IPCC), Fourth assessment report (2007), as compared with R410A (GWP: 2088). In this specification, GWP is a value (100 years) in IPCC Fourth assessment report (2007) unless otherwise specified. Further, GWP of a mixture is represented by weighted average by the composition mass.

The cycle performance which is properties required when a working fluid is applied to heat cycle may be evaluated by the coefficient of performance and the capacity. In a case where the heat cycle system is a refrigerating cycle system, the capacity is refrigerating capacity. Further, when the working fluid is applied to a refrigerating cycle system, as items to be evaluated, the temperature glide and the discharge gas temperature may further be mentioned in addition to the cycle performance.

The working fluid of the present invention is excellent in the cycle performance, has a small temperature glide and a favorable energy efficiency. Further, it is possible to constitute a heat cycle system with a sufficiently low discharge temperature and high durability.

Now, definitions of the discharge temperature and the temperature glide will be described.

<Discharge temperature>

In the working fluid for heat cycle, the discharge temperature (compressor discharge gas temperature) is the maximum temperature in the refrigerating cycle. Since the discharge temperature has influence over the heat resistance of materials constituting the compressor, a refrigerant oil contained in the composition for a heat cycle system in addition to the working fluid, polymer materials, etc., the discharge temperature is preferably lower. For example, in order that the working fluid replaces R410A, the discharge temperature of the working fluid should be lower than the discharge temperature of R410A, or even if it is higher than the discharge temperature of R410A, a temperature acceptable by the heat cycle system equipment operated with R410A.

<Temperature glide>

The temperature glide is an index to a difference in the composition between in a liquid phase and in a gaseous phase of a mixture as the working fluid. The temperature glide is defined as properties such that the initiation temperature and the completion temperature of evaporation in an evaporator or of condensation in a condenser, for example, as the heat exchanger, differ from each other. The temperature glide of an azeotropic mixture fluid is 0, and the temperature glide of a pseudoazeotropic mixture is extremely small and close to 0.

If the temperature glide is large, for example, the inlet temperature of an evaporator tends to be low, and frosting is likely to occur. Further, in a heat cycle system, the heat exchange efficiency is to be improved by making the working fluid and the heat source fluid such as water or the air flowing in heat exchangers flow in countercurrent flow. Since the temperature difference of the heat source fluid is small in a stable operation state, it is difficult to obtain a heat cycle system with a good energy efficiency with a mixture fluid with a large temperature glide. Accordingly, in a case where a mixture is used as the working fluid, a working fluid with a small temperature glide is desired.

Further, when a non-azeotropic mixture fluid is put into a refrigerator or an air-conditioning apparatus from a pressure container, it undergoes a composition change. Further, if a refrigerant leaks out from a refrigerator or an air-conditioning apparatus, the refrigerant composition in the refrigerator or the air-conditioning apparatus is very likely to change, and a recovery to an initial refrigerant composition is hardly possible. The above problems can be avoided with an azeotropic or pseudoazeotropic mixture fluid.

In the working fluid of the present invention, HFO-1123 and HFO-1132 contained form a pseudoazeotropic mixture with a predetermined composition, and thus the working fluid has a small temperature glide. Further, also in a case where at least one of HFC-32 and HFC-125 is further contained, in the working fluid of the present invention, HFO-1123 and HFO-1132, and HFC-32 and/or HFC-125 form a pseudoazeotropic mixture with a predetermined composition, and accordingly the working fluid has a small temperature glide. Particularly, a mixture having the after-described composition is a working fluid having a very small temperature glide of at most 1°C.

In the present invention, the proportion of HFO-1132 based on the entire amount (100 mass%) of the working fluid (hereinafter referred to as "1132/working fluid") is preferably at most 43 mass%. When 1132/working fluid is at most 43 mass%, a working fluid having a sufficiently low discharge temperature, being excellent in the cycle performance (refrigerating capacity and coefficient of performance) and having a very small temperature glide of at most 1°C can be obtained. 1132/working fluid is preferably at least 10 mass% and at most 43 mass%, more preferably at least 13 mass% and at most 40 mass%, most preferably at least 15 mass% and at most 35 mass%.

In the present invention, the proportion of the total amount of HFO-1123 and HFO-1132 based on the entire amount (100 mass%) of the working fluid (hereinafter referred to as "(1123+1132)/working fluid") is preferably at least 20 mass% and at most 100 mass%, more preferably at least 40 mass% and at most 100 mass%, most preferably at least 60 mass% and at most 100 mass%. When (1123+1132)/working fluid is within the above range, a working fluid excellent in the cycle performance (refrigerating capacity and coefficient of performance), having a small temperature glide and having a sufficiently low discharge temperature will be obtained.

The proportion of HFO-1123 based on the entire amount (100 mass%) of the working fluid (hereinafter referred to as "1123/working fluid") is preferably at least 57 mass% and at most 90 mass%, more preferably at least 60 mass% and at most 85 mass%, most preferably at least 65 mass% and at most 80 mass%. When 1123/working fluid is within the above range, a remarkable decrease in the coefficient of performance can be prevented, and sufficiently high refrigerating capacity can be maintained. Further, a working fluid having a sufficiently small temperature glide, having a sufficiently low discharge temperature and having low GWP can be obtained.

Further, HFO-1123 is known to undergo chain self-decomposition reaction involving a rapid temperature and pressure increase at high temperature or with an ignition source under high pressure, when used alone. However, the working fluid for heat cycle of the present invention, which is a mixture of HFO-1123 with HFO-1132 with a lowered content of HFO-1123, is considered to have self-decomposition reaction suppressed.

In a case where the working fluid of the present invention further contains at least one of HFC-32 and HFC-125, based on the entire amount (100 mass%) of the working fluid, each of the proportion of HFC-32 (hereinafter referred to as "32/working fluid") and the proportion of HFC-125 (hereinafter referred to as "125/working fluid") is at most 60 mass%, and the proportion of the total amount of HFC-32 and HFC-125 (hereinafter referred to as "(32+125)/working fluid") is also preferably at most 60 mass%. Within the above range, a working fluid excellent in the cycle performance (refrigerating capacity and coefficient of performance), having a sufficiently small temperature glide and having a sufficiently low discharge temperature can be obtained.

The range of 32/working fluid is more preferably from 10 to 60 mass%, most preferably from 10 to 40 mass%. The range of 125/working fluid is more preferably from 15 to 60 mass%, most preferably from 15 to 40 mass%. Further, the range of (32+125)/working fluid is more preferably from 35 to 60 mass%, most preferably from 40 to 60 mass%.

Further, a working fluid containing HFO-1123 and containing both HFC-32 and HFC-125, although not included in the composition range of the working fluid of the present invention, also has high coefficient of performance and capacity and is excellent in the cycle performance. Further, it has a small temperature glide, has a favorable energy efficiency, has a low discharge temperature and has high durability.

<Optional component>

The working fluid for heat cycle of the present invention may optionally contain a compound commonly contained in a working fluid, other than HFO-1123, HFO-1132, HFC-32 and HFC-125, within a range not to impair the effects of the present invention.

The compound which the working fluid of the present invention may optionally contain other than HFO-1123, HFO-1132, HFC-32 and HFC-125 (hereinafter referred to as an optional component) may be a HFO other than HFO-1123 and HFO-1132, a HFC other than HFC-32 and HFC-125, a hydrocarbon, a HCFO or a CFO.

In the working fluid of the present invention, the total content of the optional component is less than 10 mass%, preferably less than 3 mass% in the working fluid (100 mass%). If the content of the optional component exceeds 10 mass%, when the working fluid is used for e.g. a refrigerant, if the working fluid leaks out from a heat cycle apparatus, the temperature glide of the working fluid may be large, and in addition, the balance of the discharge temperature and GWP may be lost.

(HFO other than HFO-1123 and HFO-1132)

The HFO other than HFO-1123 and HFO-1132 which the working fluid of the present invention may contain, may, for example, be HFO-1261yf, HFO-1243yc, trans-1,2,3,3,3-pentafluoropropene (HFO-1225ye(E)), cis-1,2,3,3,3-pentafluoropropene (HFO-1225ye(Z)), HFO-1234yf, HFO-1234ze(E), HFO-1234ze(Z) or HFO-1243zf. The HFO may be used alone or in combination of two or more.

In a case where the working fluid of the present invention contains a HFO other than HFO-1123 and HFO-1132, the content is preferably from 1 to 9 mass%, more preferably from 1 to 2 mass% in the working fluid (100 mass%).

(HFC other than HFC-32 and HFC-125)

A HFC is a component which improves the refrigerating capacity of the cycle performance of a heat cycle system. The HFC other than HFC-32 and HFC-125 which the working fluid of the present invention may contain, may, for example, be HFC-152a, difluoroethane, trifluoroethane, HFC-134a, pentafluoropropane, hexafluoropropane, heptafluoropropane, pentafluorobutane or heptafluorocyclopentane. The HFC may be used alone or in combination of two or more.

The HFC is particularly preferably HFC-134 or HFC-152a, in view of less influence over the ozone layer and less influence over global warming.

In a case where the working fluid of the present invention contains a HFC other than HFC-32 and HFC-125 , the content is preferably from 1 to 9 mass%, more preferably from 1 to 2 mass% in the working fluid (100 mass%). The content of such a HFC may be controlled depending upon the required properties of the working fluid.

(Hydrocarbon)

The hydrocarbon may, for example, be propane, propylene, cyclopropane, butane, isobutane, pentane or isopentane.

The hydrocarbon may be used alone or in combination of two or more.

In a case where the working fluid of the present invention contains a hydrocarbon, its content is preferably from 1 to 9 mass%, more preferably from 1 to 2 mass% in the working fluid (100 mass%). When the content of the hydrocarbon is at least 1 mass%, the solubility of the refrigerant oil in the working fluid will sufficiently improve. When the content of the hydrocarbon is at most 9 mass%, the hydrocarbon is effective to suppress combustibility of the working fluid for heat cycle.

(HCFO, CFO)

The HCFO may, for example, be a hydrochlorofluoropropene or a hydrochlorofluoroethylene, and particularly preferred is 1-chloro-2,3,3,3-tetrafluoropropene (HCFO-1224yd) or 1-chloro-1,2-difluoroethylene (HCFO-1122) with a view to sufficiently suppressing combustibility of the working fluid without significantly decreasing the refrigerating capacity of the cycle performance of the heat cycle system.

The HCFO may be used alone or in combination of two or more.

The CFO may, for example, be chlorofluoropropene or chlorofluoroethylene, and is particularly preferably 1,1-dichloro-2,3,3,3-tetrafluoropropene (CFO-1214ya) or 1,2-dichloro-1,2-difluoroethylene (CFO-1112) with a view to sufficiently suppressing combustibility of the working fluid without significantly decreasing the refrigerating capacity of the cycle performance of the heat cycle system.

In a case where the working fluid of the present invention contains a HCFO and/or a CFO, the total content is preferably from 1 to 9 mass% in the working fluid (100 mass%). Chlorine atoms have an effect to suppress combustibility, and when the content of the HCFO and the CFO is within such a range, combustibility of the working fluid can be sufficiently suppressed without significantly decreasing the refrigerating capacity of the cycle performance of the heat cycle system. Further, they are components which improve the solubility of the refrigerant oil in the working fluid. As the HCFO and the CFO, preferred is a HCFO which has less influence over the ozone layer and which has less influence over global warming.

[Composition for heat cycle system]

When the working fluid for heat cycle of the present invention is applied to a heat cycle system, it may be used as a composition for a heat cycle system usually as mixed with a refrigerant oil. Further, the composition for a heat cycle system of the present invention may further contain a known additive such as a stabilizer or a leak detecting substance in addition to the working fluid for heat cycle and a refrigerant oil.

(Refrigerant oil)

As a refrigerant oil, a working fluid comprising a halogenated hydrocarbon and a known refrigerant oil used for a composition for a heat cycle system may be used without any particular restrictions. The refrigerant oil may, for example, be specifically an oxygen-containing synthetic oil (such as an ester refrigerant oil or an ether refrigerant oil), a fluorinated refrigerant oil, a mineral refrigerant oil or a hydrocarbon synthetic oil.

As the ester refrigerant oil, a dibasic acid ester oil, a polyol ester oil, a complex ester oil, a polyol carbonate oil or the like may be mentioned.

The dibasic acid ester oil is preferably an ester of a $C_{5-10}$ dibasic acid (such as glutaric acid, adipic acid, pimelic acid, suberic acid, azelaic acid or sebacic acid) with a $C_{1-15}$ monohydric alcohol which is linear or has a branched alkyl group (such as methanol, ethanol, propanol, butanol, pentanol, hexanol, heptanol, octanol, nonanol, decanol, undecanol, dodecanol, tridecanol, tetradecanol or pentadecanol). It may, for example, be specifically ditridecyl glutarate, di(2-ethylhexyl) adipate, diisodecyl adipate, ditridecyl adipate or di(3-ethylhexyl) sebacate.

The polyol ester oil is preferably an ester of a diol (such as ethylene glycol, 1,3-propanediol, propylene glycol, 1,4-butanediol, 1,2-butanediol, 1,5-pentadiol, neopentyl glycol, 1,7-heptanediol or 1,12-dodecanediol) or a polyol having from 3 to 20 hydroxy groups (such as trimethylolethane, trimethylolpropane, trimethylolbutane, pentaerythritol, glycerin, sorbitol, sorbitan or a sorbitol/glycerin condensate) with a $C_{6-20}$ fatty acid (such as a linear or branched fatty acid such as hexanoic acid, heptanoic acid, octanoic acid, nonanoic acid, decanoic acid, undecanoic acid, dodecanoic acid, eicosanoic acid or oleic acid, or a so-called neo acid having a quaternary α carbon atom).

The polyol ester oil may have a free hydroxy group.

The polyol ester oil is preferably an ester (such as trimethylolpropane triplelargonate, pentaerythritol 2-ethyl-hexanoate or pentaerythritol tetrapelargonate) of a hindered alcohol (such as neopentyl glycol, trimethylolethane, trimethylolpropane, trimethylolbutane or pentaerythritol).

The complex ester oil is an ester of a fatty acid and a dibasic acid, with a monohydric alcohol and a polyol. The fatty acid, the dibasic acid, the monohydric alcohol and the polyol may be as defined above.

The polyol carbonate oil is an ester of carbonic acid with a polyol.

The polyol may be the above described diol or the above described polyol. Further, the polyol carbonate oil may be a ring-opening polymer of a cyclic alkylene carbonate.

The ether refrigerant oil may, for example, be a polyvinyl ether oil or a polyoxyalkylene oil.

The polyvinyl ether oil may be one obtained by polymerizing a vinyl ether monomer such as an alkyl vinyl ether, or a copolymer of a vinyl ether monomer and a hydrocarbon monomer having an olefinic double bond.

The vinyl ether monomer may be used alone or in combination of two or more.

The hydrocarbon monomer having an olefinic double bond may, for example, be ethylene, propylene, various forms of butene, various forms of pentene, various forms of hexene, various forms of heptene, various forms of octene, diisobutylene, triisobutylene, styrene, α-methylstyrene or alkyl-substituted styrene. The hydrocarbon monomer having an olefinic double bond may be used alone or in combination of two or more.

The polyvinyl ether copolymer may be either of a block copolymer and a random copolymer. The polyvinyl ether copolymer may be used alone or in combination of two or more.

The polyoxyalkylene oil may, for example, be a polyoxyalkylene monool, a polyoxyalkylene polyol, an alkyl ether of a polyoxyalkylene monool or a polyoxyalkylene polyol, or an ester of a polyoxyalkylene monool or a polyoxyalkylene polyol.

The polyoxyalkylene monool or the polyoxyalkylene polyol may be one obtained by e.g. a method of subjecting a $C_{2-4}$ alkylene oxide (such as ethylene oxide or propylene oxide) to ring-opening addition polymerization to an initiator such as water or a hydroxy group-containing compound in the presence of a catalyst such as an alkali hydroxide. Further, one molecule of the polyoxyalkylene chain may contain single oxyalkylene units or two or more types of oxyalkylene units. It is preferred that at least oxypropylene units are contained in one molecule.

The initiator to be used for the reaction may, for example, be water, a monohydric alcohol such as methanol or butanol, or a polyhydric alcohol such as ethylene glycol, propylene glycol, pentaerythritol or glycerol.

The polyoxyalkylene oil is preferably an alkyl ether or ester of a polyoxyalkylene monool or polyoxyalkylene polyol. Further, the polyoxyalkylene polyol is preferably a polyoxyalkylene glycol. Particularly preferred is an alkyl ether of a polyoxyalkylene glycol having the terminal hydroxy group of the polyoxyalkylene glycol capped with an alkyl group such as a methyl group, which is called a polyglycol oil.

The fluorinated refrigerant oil may, for example, be a compound having hydrogen atoms of a synthetic oil (such as the after-mentioned mineral oil, poly-α-olefin, alkylbenzene or alkylnaphthalene) substituted by fluorine atoms, a perfluoropolyether oil or a fluorinated silicone oil.

The mineral refrigerant oil may, for example, be a naphthene mineral oil or a paraffin mineral oil obtained by purifying a refrigerant oil fraction obtained by atmospheric distillation or vacuum distillation of crude oil by a purification treatment (such as solvent deasphalting, solvent extraction, hydrocracking, solvent dewaxing, catalytic dewaxing, hydrotreating or clay treatment) optionally in combination.

The hydrocarbon synthetic oil may, for example, be poly-α-olefin, an alkylbenzene or an alkylnaphthalene.

The refrigerant oil may be used alone or in combination of two or more.

The refrigerant oil is preferably at least one member selected from a polyol ester oil, a polyvinyl ether oil and a polyglycol oil in view of the compatibility with the working fluid for heat cycle. It is particularly preferably a polyglycol oil with a view to obtaining a remarkable antioxidant effect by the after-mentioned stabilizer.

In the composition for a heat cycle system, the content of the refrigerant oil is within a range not to remarkably deteriorate the effects of the present invention and varies depending upon the purpose of application, the form of the compressor, etc., and is usually from 10 to 100 parts by mass, preferably from 20 to 50 parts by mass based on the working fluid for heat cycle (100 parts by mass).

(Stabilizer)

The stabilizer is a component which improves the stability of the working fluid for heat cycle against heat and oxidation. A known stabilizer which has been used for a heat cycle system together with a working fluid comprising a halogenated hydrocarbon, for example, an oxidation resistance-improving agent, a heat resistance-improving agent or a metal deactivator, may be used without any particular restrictions.

The oxidation resistance-improving agent and the heat resistance-improving agent may, for example, be N,N'-diphenylphenylenediamine, p-octyldiphenylamine, p,p'-dioctyldiphenylamine, N-phenyl-1-naphthylamine, N-phenyl-2-naphthylamine, N-(p-dodecyl)phenyl-2-naphthylamine, di-1-naphthylamine, di-2-naphthylamine, N-alkylphenothiazine, 6-(t-butyl)phenol, 2,6-di-(t-butyl)phenol, 4-methyl-2,6-di-(t-butyl)phenol or 4,4'-methylenebis(2,6-di-t-butylphenol). The oxidation resistance-improving agent and the heat resistance-improving agent may be used alone or in combination of two or more.

The metal deactivator may, for example, be imidazole, benzimidazole, 2-mercaptobenzothiazole, 2,5-dimercaptothiadiazole, salicylidene-propylenediamine, pyrazole, benzotriazole, tritriazole, 2-methylbenzimidazole, 3,5-dimethylpyrazole, methylenebis-benzotriazole, an organic acid or an ester thereof, a primary, secondary or tertiary aliphatic amine, an amine salt of an organic acid or inorganic acid, a heterocyclic nitrogen-containing compound, an amine salt of an alkyl phosphate, or a derivative thereof.

The amount of the stabilizer is not limited within a range not to remarkably decrease the effects of the present invention, and is preferably at most 5 parts by mass, more preferably at most 1 part by mass per 100 parts by mass of the working fluid.

(Leak detecting substance)

The leak detecting substance may, for example, be an ultraviolet fluorescent dye, an odor gas or an odor masking agent.

The ultraviolet fluorescent dye may be known ultraviolet fluorescent dyes which have been used for a heat cycle system together with a working fluid comprising a halogenated hydrocarbon, such as dyes as disclosed in e.g. US Patent No. 4,249,412, JP-A-10-502737, JP-A-2007-511645, JP-A-2008-500437 and JP-A-2008-531836.

The odor masking agent may be known perfumes which have been used for a heat cycle system together with a working fluid comprising a halogenated hydrocarbon, such as perfumes as disclosed in e.g. JP-A-2008-500437 and JP-A-2008-531836.

In a case where the leak detecting substance is used, a solubilizing agent which improves the solubility of the leak detecting substance in the working fluid may be used.

The solubilizing agent may be ones as disclosed in e.g. JP-A-2007-511645, JP-A-2008-500437 and JP-A-2008-531836.

The amount of the leak detecting substance is within a range not to remarkably decrease the effects of the present invention, and is preferably at most 2 parts by mass, more preferably at most 0.5 part by mass, per 100 parts by mass of the working fluid.

(Other compound)

The composition for a heat cycle system of the present invention may contain a compound used for a conventional working fluid for heat cycle, refrigerant or heat transfer fluid (hereinafter referred to as other compound) in addition to the lubricating agent, the stabilizer and the leak detecting substance. As such other compound, the following compounds may be mentioned.

Fluorinated ether: Perfluoropropyl methyl ether ($C_3F_7OCH_3$), perfluorobutyl methyl ether ($C_4F_9OCH_3$), perfluorobutyl ethyl ether ($C_4F_9OC_2H_5$), 1,1,2,2-tetrafluoroethyl-2,2,2-trifluoroethyl ether ($CF_2HCF_2OCH_2CF_3$, manufactured by Asahi Glass Company, Limited, AE-3000), etc.

The content of such other compound is not limited within a range not to remarkably decrease the effects of the present invention, and is usually at most 30 mass%, preferably at most 20 mass%, more preferably at most 15 mass% in the composition for a heat cycle system (100 mass%).

The composition for a heat cycle system of the present invention, which comprises a working fluid containing HFO-1123 and HFO-1132, has a small temperature glide, a low discharge temperature and is excellent in the cycle performance (refrigerating capacity and coefficient of performance), and a heat cycle system having less influence over global worming can be obtained with it.

[Heat cycle system]

The heat cycle system of the present invention is a system employing the working fluid for heat cycle of the present invention. When the working fluid of the present invention is applied to a heat cycle system, usually the working fluid is applied as contained in the composition for a heat cycle system. The heat cycle system of the present invention may be a heat pump system utilizing heat obtained by a condenser or may be a refrigerating cycle system utilizing coldness obtained by an evaporator.

The heat cycle system of the present invention may, for example, be specifically a refrigerating apparatus, an air-conditioning apparatus, a power generation system, a heat transfer apparatus and a secondary cooling machine.

Among them, the heat cycle system of the present invention, which stably exhibits heat cycle performance in a working environment at higher temperature, is preferably employed as an air-conditioning apparatus to be disposed outdoors in many cases. Further, the heat cycle system of the present invention is preferably employed also for a refrigerating apparatus.

The air-conditioning apparatus may, for example, be specifically a room air-conditioner, a package air-conditioner (such as a store package air-conditioner, a building package air-conditioner or a plant package air-condition, a gas engine heat pump, a train air-conditioning system or an automobile air-conditioning system.

The refrigerating apparatus may, for example, be specifically a showcase (such as a built-in showcase or a separate showcase), an industrial fridge freezer, a vending machine or an ice making machine.

The power generation system is preferably a power generation system by Rankine cycle system.

The power generation system may, for example, be specifically a system wherein in an evaporator, a working fluid is heated by e.g. geothermal energy, solar heat or waste heat in a medium-to-high temperature range at a level of from 50 to 200°C, and the vaporized working fluid in a high temperature and high pressure state is adiabatically expanded by an expansion device, so that a power generator is driven by the work generated by the adiabatic expansion to carry out power generation.

Further, the heat cycle system of the present invention may be a heat transport apparatus. The heat transport apparatus is preferably a latent heat transport apparatus.

The latent heat transport apparatus may, for example, be a heat pipe conducting latent heat transport utilizing evaporation, boiling, condensation, etc. of a working fluid filled in an apparatus, and a two-phase closed thermosiphon. A heat pipe is applied to a relatively small-sized cooling apparatus such as a cooling apparatus of a heating portion of a semiconductor device and electronic equipment. A two-phase closed thermosiphon is widely used for a gas/gas heat exchanger, to accelerate snow melting and to prevent freezing of roads, since it does not require a wick and its structure is simple.

Now, a refrigerating cycle system as an example of the heat cycle system of the present invention will be described. The refrigerating cycle system is a system wherein in an evaporator, a working fluid for heat cycle removes heat energy from a load fluid to cool the load fluid thereby to accomplish cooling to a lower temperature.

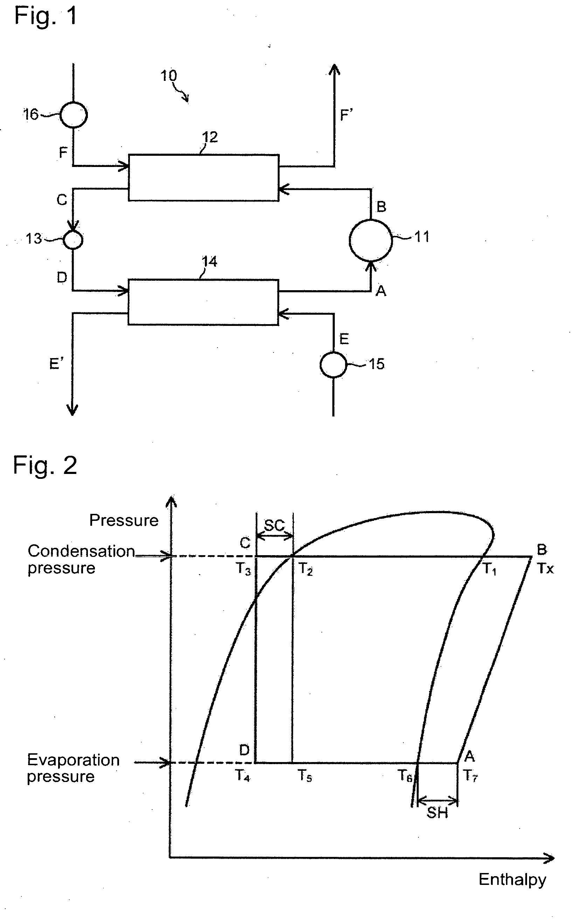

Fig. 1 is a schematic construction view illustrating an example of a refrigerating cycle system of the present invention. A refrigerating cycle system 10 is a system generally comprising a compressor 11 to compress a vapor A of the working fluid for heat cycle to form a high temperature/high pressure vapor B of the working fluid for heat cycle, a condenser 12 to cool and liquefy the vapor B of the working fluid for heat cycle discharged from the compressor 11 to form a low temperature/high pressure working fluid C for heat cycle, an expansion valve 13 to let the working fluid C for heat cycle discharged from the condenser 12 expand to form a low temperature/low pressure working fluid D for heat cycle, an evaporator 14 to heat the working fluid D for heat cycle discharged from the expansion valve 13 to form a high temperature/low pressure vapor A of the working fluid for heat cycle, a pump 15 to supply a load fluid E to the evaporator 14, and a pump 16 to supply a fluid F to the condenser 12.

In the refrigerating cycle system 10, a cycle of the following (i) to (iv) is repeated.

(i) A working fluid vapor A discharged from an evaporator 14 is compressed by a compressor 11 to form a high temperature/high pressure working fluid vapor B (hereinafter referred to as "AB process").

(ii) The working fluid vapor B discharged from the compressor 11 is cooled and liquefied by a fluid F in a condenser 12 to form a low temperature/high pressure working fluid C. At that time, the fluid F is heated to form a fluid F', which is discharged from the condenser 12 (hereinafter referred to as "BC process").

(iii) The working fluid C discharged from the condenser 12 is expanded in an expansion valve 13 to form a low temperature/low pressure working fluid D (hereinafter referred to as "CD process").

(iv) The working fluid D discharged from the expansion valve 13 is heated by a load fluid E in the evaporator 14 to form a high temperature/low pressure working fluid vapor A. At that time, the load fluid E is cooled and becomes a load fluid E', which is discharged from the evaporator 14 (hereinafter referred to as "DA process").

The refrigerating cycle system 10 is a cycle system comprising an adiabatic isentropic change, an isenthalpic change and an isobaric change. The state change of the working fluid, as represented on a pressure-enthalpy diagram (curve) as shown in Fig. 2, may be represented as a trapezoid having points A, B, C and D as vertexes.

The AB process is a process wherein adiabatic compression is carried out by the compressor 11 to change the high temperature/low pressure working fluid vapor A to a high temperature/high pressure working fluid vapor B, and is represented by the line AB in Fig. 2.

The BC process is a process wherein isobaric cooling is carried out in the condenser 12 to change the high temperature/high pressure working fluid vapor B to a low temperature/high pressure working fluid C and is represented by the BC line in Fig. 2. The pressure in this process is the condensation pressure. Of the two intersection points of the pressure-enthalpy diagram and the BC line, the intersection point $T_1$ on the high enthalpy side is the condensing temperature, and the intersection point $T_2$ on the low enthalpy side is the condensation boiling point temperature. Here, the temperature glide of a mixture fluid is represented by the difference between $T_1$ and $T_2$.

The CD process is a process wherein isenthalpic expansion is carried out by the expansion valve 13 to change the low temperature/high pressure working fluid C to a low temperature/low pressure working fluid D and is presented by the CD line in Fig. 2. $T_2$-$T_3$ corresponds to the supercoiling degree (hereinafter referred to as "SC" as the case requires) of the working fluid in the cycle of (i) to (iv), where $T_3$ is the temperature of the low temperature/high pressure working fluid C.

The DA process is a process wherein isobaric heating is carried out in the evaporator 14 to have the low temperature/low pressure working fluid D returned to a high temperature/low pressure working fluid vapor A, and is represented by the DA line in Fig. 2. The pressure in this process is the evaporation pressure. Of the two intersection points of the pressure-enthalpy diagram and the DA line, the intersection point $T_6$ on the high enthalpy side is the evaporation temperature. $T_7$-$T_6$ corresponds to the degree of superheat (hereinafter referred to as "SH" as the case requires) of the working fluid in the cycle of (i) to (iv), where $T_7$ is the temperature of the working fluid vapor A. $T_4$ indicates the temperature of the working fluid D.

As mentioned above, cycle performance of the working fluid is evaluated, for example, by the refrigerating capacity (hereinafter referred to as "Q" as the case requires) and the coefficient of performance (hereinafter referred to as "COP" as the case requires) of the working fluid. Q and COP of the working fluid are obtained respectively in accordance with the following formulae (1) and (2) from enthalpies $h_A$, $h_B$, $h_C$ and $h_D$ in the respective states A (after evaporation, high temperature and low pressure), B (after compression, high temperature and high pressure), C (after condensation, low temperature and high pressure) and D (after expansion, low temperature and low pressure) of the working fluid:

$$Q = h_A - h_D \qquad (1)$$

$$COP = Q/\text{compression work} = (h_A - h_D)/(h_B - h_A) \qquad (2)$$

COP means the efficiency in the refrigerating cycle system, and a higher COP means that a higher output (for example, Q) can be obtained by a smaller input (for example, an electric energy required to operate a compressor).

Further, Q means a capacity to freeze a load fluid, and a higher Q means that more works can be done in the same system. In other words, it means that with a working fluid having a higher Q, the desired performance can be obtained with a smaller amount, whereby the system can be downsized.

In the heat cycle system of the present invention employing the working fluid of the present invention, for example, in a refrigerating cycle system 10 shown in Fig. 1, as compared with a case where R410 which has been commonly used for an air-conditioning apparatus or the like is used, it is possible to achieve high levels, that is, levels equal to or higher than R410A, of Q and COP, while remarkably suppressing the global worming potential.

At the time of operation of the heat cycle system, in order to avoid drawbacks due to inclusion of moisture or inclusion of non-condensing gas such as oxygen, it is preferred to provide a means to suppress such inclusion.

If moisture is included in the heat cycle system, a problem may occur particularly when the heat cycle system is used at low temperature. For example, problems such as freezing in a capillary tube, hydrolysis of the working fluid or the refrigerant oil, deterioration of materials by an acid component formed in the cycle, formation of contaminants, etc. may arise. Particularly, if the refrigerant oil is a polyglycol oil or a polyol ester oil, it has extremely high moisture absorbing properties and is likely to undergo hydrolysis, and inclusion of moisture decreases properties of the refrigerant oil and may be a great cause to impair the long term reliability of a compressor. Accordingly, in order to suppress hydrolysis of the refrigerant oil, it is necessary to control the moisture concentration in the heat cycle system.

As a method of controlling the moisture concentration in the heat cycle system, a method of using a moisture-removing means such as a desiccating agent (such as silica gel, activated alumina or zeolite) may be mentioned. The desiccating agent is preferably brought into contact with the working fluid in a liquid state, in view of the dehydration efficiency. For example, the desiccating agent is preferably located at the outlet of the condenser 12 or at the inlet of the evaporator 14 to be brought into contact with the working fluid.

The desiccating agent is preferably a zeolite desiccating agent in view of chemical reactivity of the desiccating agent and the working fluid, and the moisture absorption capacity of the desiccating agent.

The zeolite desiccating agent is, in a case where a refrigerant oil having a large moisture absorption as compared with a conventional mineral refrigerant oil is used, preferably a zeolite desiccating agent containing a compound represented by the following formula (3) as the main component in view of excellent moisture absorption capacity.

$$M_{2/n}O \cdot Al_2O_3 \cdot xSiO_2 \cdot yH_2O \qquad (3)$$

wherein M is a group 1 element such as Na or K or a group 2 element such as Ca, n is the valence of M, and x and y are values determined by the crystal structure. The pore size can be adjusted by changing M.

To select the desiccating agent, the pore size and the fracture strength are important.

In a case where a desiccating agent having a pore size larger than the molecular size of the working fluid is used, the working fluid is adsorbed in the desiccating agent and as a result, chemical reaction of the working fluid with the desiccating agent will occur, thus leading to undesired phenomena such as formation of non-condensing gas, a decrease in the strength of the desiccating agent, and a decrease in the adsorption capacity.

Accordingly, it is preferred to use as the desiccating agent a zeolite desiccating agent having a small pore size. Particularly preferred is sodium/potassium type A synthetic zeolite having a pore size of at most 3.5 Å. By using a sodium/potassium type A synthetic zeolite having a pore size smaller than the molecular size of the working fluid, it is possible to selectively adsorb and remove only moisture in the heat cycle system without adsorbing the working fluid. In other words, the working fluid is less likely to be adsorbed in the desiccating agent, whereby heat decomposition is less likely to occur and as a result, deterioration of materials constituting the heat cycle system and formation of contaminants can be suppressed.

The size of the zeolite desiccating agent is preferably from about 0.5 to about 5 mm, since if it is too small, a valve or a thin portion in pipelines of the heat cycle system may be clogged, and if it is too large, the drying capacity will be decreased. Its shape is preferably granular or cylindrical.

The zeolite desiccating agent may be formed into an optional shape by solidifying powdery zeolite by a binding agent (such as bentonite). So long as the desiccating agent is composed mainly of the zeolite desiccating agent, other desiccating agent (such as silica gel or activated alumina) may be used in combination.

The proportion of the zeolite desiccating agent based on the working fluid is not particularly limited.

If non-condensing gas is included in the heat cycle system, it has adverse effects such as heat transfer failure in the condenser or the evaporator and an increase in the working pressure, and its inclusion should be avoided as far as possible. Particularly, oxygen which is one of non-condensing gases reacts with the working fluid or the refrigerant oil and promotes their decomposition.

The non-condensing gas concentration is preferably at most 1.5 vol%, particularly preferably at most 0.5 vol%, by the volume ratio based on the working fluid, in a gaseous phase of the working fluid.

(Chlorine concentration)

If chlorine is present in the heat cycle system, it has adverse effects such as formation of a deposit by a reaction with a metal, friction of a bearing, and decomposition of the working fluid for heat cycle or the refrigerant oil.

The chlorine concentration in the heat cycle system is preferably at most 100 ppm, particularly preferably at most 50 ppm by the mass ratio based on the working fluid for heat cycle.

(Metal concentration)

If a metal such as palladium, nickel or iron is present in the heat cycle system, it has adverse effects such as decomposition or oligomerization of HFO-1123.

The metal concentration in the heat cycle system is preferably at most 5 ppm, particularly preferably at most 1 ppm by the mass ratio based on the working fluid for heat cycle.

(Acid concentration)

If an acid is present in the heat cycle system, it has adverse effects such as oxidative destruction or acceleration of self-decomposition reaction of HFO-1123.

The acid concentration in the heat cycle system is preferably at most 1 ppm, particularly preferably at most 0.2 ppm by the mass ratio based on the working fluid for heat cycle.

Further, it is preferred to provide a means to remove an acid content by a deoxidizing agent such as NaF in the heat cycle system, for the purpose of removing the acid content from the composition for a heat cycle system, thereby to remove the acid content from the composition for a heat cycle system.

(Residue concentration)

If a residue such as a metal powder, an oil other than the refrigerant oil or a high boiling component is present in the heat cycle system, it has adverse effects such as clogging of a vaporizer and an increase in the resistance of a rotating part, and its inclusion should be avoided as far as possible. The residue concentration in the heat cycle system is preferably at most 1,000 ppm, particularly preferably at most 100 ppm by the mass ratio based on the working fluid for heat cycle.

The residue may be removed by subjecting the working fluid for heat cycle to filtration through e.g. a filter. Further, the components (HFO-1123, HFO-1234yf and the like) of the working fluid for heat cycle may be separately subjected to filtration through a filter to remove the residue, before they are formed into a working fluid for heat cycle, and then the components are mixed to form a working fluid for heat cycle.

The above-described heat cycle system of the present invention, which employs the working fluid of the present invention, has favorable cycle performance (refrigerating capacity and coefficient of performance) while the influence over global warming is suppressed.

Further, as mentioned above, a working fluid containing HFO-1123 and containing both HFC-32 and HFC-125, is also excellent in the cycle performance (refrigerating capacity and coefficient of performance), has a small temperature glide and has a low discharge temperature when applied to a heat cycle system, in the same manner as the working fluid of the present invention. Accordingly, by employing such a working fluid, a heat cycle system having a small temperature glide, having a low discharge temperature and excellent in the cycle performance (refrigerating capacity and coefficient of performance) can be obtained by constituting it in the same manner as the case of using the working fluid of the present invention.

EXAMPLES

Now, the present invention will be described in further detail with reference to Examples. However, it should be understood that the present invention is by no means restricted to such specific Examples. Ex. 1 to 11 and 13 to 48 are Examples of the present invention, and Ex. 12 and Ex. 50 to 55 are Reference Examples employing a composition different from that of the working fluid of the present invention. Further, Ex. 49 is an example of R410A employed as a standard for evaluation in Examples of the present invention (Ex. 1 to 11 and 13 to 48) and Reference Examples (Ex. 12 and 50 to 55) and is a Comparative Example.

The refrigerating cycle performance (refrigerating capacity Q and coefficient of performance COP), the temperature glide and the discharge temperature of the working fluid were measured and evaluated as follows.

<Measurement of temperature glide and refrigerating cycle performance>

The refrigerating cycle performance (refrigerating capacity and coefficient of performance) and the temperature glide were measured in a case where a working fluid was applied to a refrigerating cycle system 10 shown in Fig. 1, and a heat cycle shown in Fig. 2, that is, adiabatic compression by a compressor 11 in the AB process, isobaric cooling by a condenser 12 in the BC process, isenthalpic expansion by an expansion valve 13 in the CD process, and isobaric heating in an evaporator 14 in the DA process, were carried out.

The measurement conditions were such that the average evaporation temperature of the working fluid in the evaporator 14 was 0°C, the average condensing temperature of the working fluid in the condenser 12 was 40°C, the supercooling degree (SC) of the working fluid in the condenser 12 was 5°C, and the degree of superheat (SH) of the working fluid in the evaporator 14 was 5°C. Further, it was assumed that there was no loss in the equipment efficiency and no pressure loss in the pipelines and heat exchanger.

The refrigerating capacity (Q) and the coefficient of performance (COP) were obtained in accordance with the above formulae (1) and (2) from enthalpies h in the respective states of the working fluid, i.e. A (after evaporation, high temperature and low pressure), B (after compression, high temperature and high pressure), C (after condensation, low temperature and high pressure) and D (after expansion, low temperature and low pressure).

The thermodynamic properties required for calculation of the cycle performance were calculated based on the generalized equation of state (Soave-Redlich-Kwong equation) based on the law of corresponding state and various thermodynamic equations. If a characteristic value was not available, it was calculated employing an estimation technique based on a group contribution method.

The refrigerating capacity and the coefficient of performance were obtained as relative values based on the refrigerating capacity and the coefficient of performance of R410A measured in the same manner as above in the after-described Ex. 41 being 1.000.

<Measurement and evaluation of discharge temperature>

The working fluid was applied to the refrigerating cycle system 10 shown in Fig. 1, in the same manner as the above measurement of the refrigerating cycle performance, under temperature conditions such that the average evaluation temperature was 0°C, the average condensing temperature was 40°C, the supercooling degree (SC) was 5°C and the degree of superheat (SH) was 5°C, and the discharge temperature T was measured. And, a difference with the discharge temperature T of 73.4°C of R410A when applied to the refrigerating cycle system under the above conditions (hereinafter referred to as discharge temperature difference ∆T) was obtained.

<Calculation of GWP>

GWP of the working fluid was obtained by weighted average by the composition mass from GWPs (as identified in Table 1) of the compounds contained in the working fluid. That is, GWP of the working fluid was obtained by dividing the sum of products of mass% and GWP of the respective compounds constituting the working fluid, by 100.

[Table 1]

| Compound | GWP |
|---|---|
| HFO-1123 | 0.3 |
| HFO-1132(E) | 10 |
| HFC-32 | 675 |
| HFC-125 | 3500 |

[Ex. 1 to 12]

In Ex. 1 to 12, a working fluid was prepared by mixing HFO-1123 and HFO-1132 in a proportion as identified in Table 2, and of the working fluid, the refrigerating cycle performance (refrigerating capacity Q and coefficient of performance COP), the temperature glide and the discharge temperature were measured and evaluated by the above methods.

The measurement and evaluation results of the refrigerating capacity (based on R410A) and the coefficient of performance (based on R410A), and the measurement results of the temperature glide and the discharge temperature difference are shown in Table 2 together with the calculation results of GWP.

[Table 2]

| | Working fluid composition [mass%] | | | Evaluation | | | | |
|---|---|---|---|---|---|---|---|---|
| | 1123+1132 | HFO-1123 | HFO-1132 (E) | Relative COP | Relative capacity | Temperature glide [°C] | Discharge temperature difference ∆T [°C] | GWP |
| Ex. 1 | 100 | 20 | 80 | 1.004 | 0.967 | 1.6 | 8.6 | 8 |
| Ex. 2 | 100 | 40 | 60 | 0.978 | 1.037 | 1.6 | 7.2 | 6 |
| Ex. 3 | 100 | 50 | 50 | 0.965 | 1.068 | 1.3 | 6.4 | 5 |
| Ex. 4 | 100 | 55 | 45 | 0.959 | 1.082 | 1.1 | 5.9 | 5 |
| Ex. 5 | 100 | 56 | 44 | 0.957 | 1.085 | 1.1 | 5.8 | 5 |
| Ex. 6 | 100 | 57 | 43 | 0.956 | 1.087 | 1.0 | 5.7 | 4 |
| Ex. 7 | 100 | 58 | 42 | 0.955 | 1.090 | 1.0 | 5.7 | 4 |
| Ex. 8 | 100 | 60 | 40 | 0.952 | 1.095 | 0.9 | 5.5 | 4 |
| Ex. 9 | 100 | 70 | 30 | 0.941 | 1.117 | 0.5 | 4.7 | 3 |

(continued)

| | Working fluid composition [mass%] | | | Evaluation | | | | |
|---|---|---|---|---|---|---|---|---|
| | 1123+1132 | HFO-1123 | HFO-1132 (E) | Relative COP | Relative capacity | Temperature glide [°C] | Discharge temperature difference ΔT [°C] | GWP |
| Ex. 10 | 100 | 80 | 20 | 0.931 | 1.134 | 0.2 | 4.0 | 2 |
| Ex. 11 | 100 | 90 | 10 | 0.924 | 1.143 | 0.0 | 3.5 | 1 |
| Ex. 12 | 100 | 99 | 1 | 0.921 | 1.146 | 0.0 | 3.1 | 0.3 |

As shown in Table 2, the working fluids in Ex. 1 to 12 comprising HFO-1123 and HFO-1132(E) have favorable coefficient of performance and refrigerating capacity relative to R410A and have a small temperature glide. Further, they have a very low GWP. Particularly the working fluids in Ex. 6 to 12 having 1132/working fluid of at most 43 mass%, have a very small temperature glide of at most 1°C and are excellent in the energy efficiency.

[Ex. 13 to 48]

In Ex. 13 to 20, a working fluid was prepared by mixing HFO-1123, HFO-1132(E) and HFC-32 in a proportion as identified in Table 3. In Ex. 21 to 28, a working fluid was prepared by mixing HFO-1123, HFO-1132(E) and HFC-125 in a proportion as identified in Table 4. In Ex. 29 to 34, a working fluid was prepared by mixing HFO-1123, HFO-1132(E), HFC-32 and HFC-125 in a proportion as identified in Table 5. Further, in Ex. 35 to 48, a working fluid was prepared by mixing HFO-1132(E) in a proportion of 10 mass%, and HFO-1132(E), HFO-1123 and HFC-32 and/or HFC-125 in a proportion as identified in Table 6. In Table 3 to 6, "1123+1132" [mass%] represents by the proportion of the total amount of HFO-1123 and HFO-1132(E) based on the entire amount of the working fluid ((1123+1132)/working fluid) by mass%. The same applies to the above Table 2 and the after-mentioned Table 8.
Of the working fluid thus obtained, the refrigerating cycle performance (refrigerating capacity Q and coefficient of performance COP), the temperature glide and the discharge temperature were measured in the same manner as above. The measurement and evaluation results of the refrigerating capacity (based on R410A) and the coefficient of performance (based on R410A), and the measurement results of the temperature glide and the discharge temperature difference are shown in Tables 3 to 6 together with the calculation results of GWP.

[Table 3]

| | Working fluid composition [mass%] | | | | Evaluation | | | | |
|---|---|---|---|---|---|---|---|---|---|
| | 1123+1132 | HFO-1123 | HFO-1132 (E) | HFC-32 | Relative COP | Relative capacity | Temperature glide [°C] | Discharge temperature difference ΔT [°C] | GWP |
| Ex. 13 | 40 | 20 | 20 | 60 | 0.977 | 1.163 | 0.3 | 13.2 | 407 |
| Ex. 14 | 60 | 40 | 20 | 40 | 0.960 | 1.178 | 0.2 | 10.1 | 272 |
| Ex. 15 | 80 | 60 | 20 | 20 | 0.943 | 1.170 | 0.2 | 7.0 | 137 |
| Ex. 16 | 60 | 20 | 40 | 40 | 0.974 | 1.137 | 0.5 | 11.2 | 274 |
| Ex. 17 | 80 | 40 | 40 | 20 | 0.961 | 1.129 | 0.8 | 8.4 | 139 |

(continued)

| | Working fluid composition [mass%] | | | | Evaluation | | | | |
|---|---|---|---|---|---|---|---|---|---|
| | 1123+1132 | HFO-1123 | HFO-1132 (E) | HFC-32 | Relative COP | Relative capacity | Temperature glide [°C] | Discharge temperature difference ∆T [°C] | GWP |
| Ex. 18 | 63 | 20 | 43 | 37 | 0.975 | 1.130 | 0.6 | 10.9 | 254 |
| Ex. 19 | 83 | 40 | 43 | 17 | 0.963 | 1.118 | 0.9 | 8.2 | 119 |
| Ex. 20 | 80 | 20 | 60 | 20 | 0.983 | 1.070 | 1.4 | 10.0 | 141 |

[Table 4]

| | Working fluid composition [mass%] | | | | Evaluation | | | | |
|---|---|---|---|---|---|---|---|---|---|
| | 1123+1132 | HFO-1123 | HFO-1132 (E) | HFC-125 | Relative COP | Relative capacity | Temperature glide [°C] | Discharge temperature difference ∆T [°C] | GWP |
| Ex. 21 | 40 | 20 | 20 | 60 | 0.941 | 0.927 | 0.6 | -7.4 | 2102 |
| Ex. 22 | 60 | 40 | 20 | 40 | 0.935 | 1.006 | 0.6 | -3.6 | 1402 |
| Ex. 23 | 80 | 60 | 20 | 20 | 0.932 | 1.074 | 0.4 | 0.2 | 702 |
| Ex. 24 | 60 | 20 | 40 | 40 | 0.963 | 0.968 | 0.7 | -2.6 | 1404 |
| Ex. 25 | 80 | 40 | 40 | 20 | 0.957 | 1.036 | 0.9 | 1.5 | 704 |
| Ex. 26 | 63 | 20 | 43 | 37 | 0.966 | 0.971 | 0.7 | -1.8 | 1299 |
| Ex. 27 | 83 | 40 | 43 | 17 | 0.960 | 1.038 | 1.0 | 2.3 | 599 |
| Ex. 28 | 80 | 20 | 60 | 20 | 0.985 | 0.977 | 1.2 | 2.9 | 706 |

[Table 5]

| | Working fluid composition [mass%] | | | | | Evaluation | | | | |
|---|---|---|---|---|---|---|---|---|---|---|
| | 1123+ 1132 | HFO-1123 | HFO-1132 (E) | HFC-32 | HFC-125 | Relative COP | Relative capacity | Temperature glide [°C] | Discharge temperature difference $\Delta T$ [°C] | GWP |
| Ex. 29 | 40 | 20 | 20 | 20 | 40 | 0.960 | 1.034 | 0.6 | -0.8 | 1537 |
| Ex. 30 | 60 | 40 | 20 | 20 | 20 | 0.951 | 1.107 | 0.4 | 3.1 | 837 |
| Ex. 31 | 40 | 20 | 20 | 40 | 20 | 0.972 | 1.110 | 0.4 | 6.0 | 972 |
| Ex. 32 | 60 | 20 | 40 | 20 | 20 | 0.970 | 1.066 | 0.7 | 4.3 | 839 |
| Ex. 33 | 53 | 10 | 43 | 20 | 27 | 0.977 | 1.034 | 0.6 | 3.0 | 1084 |
| Ex. 34 | 63 | 20 | 43 | 10 | 27 | 0.969 | 1.023 | 0.8 | 1.7 | 1017 |

[Table 6]

| | Working fluid composition [mass%] | | | | | Evaluation | | | | |
|---|---|---|---|---|---|---|---|---|---|---|
| | 1123+ 1132 | HFO-1123 | HFO-1132 (E) | HFC-32 | HFC-125 | Relative COP | Relative capacity | Temperature glide [°C] | Discharge temperature difference ΔT [°C] | GWP |
| Ex. 35 | 30 | 20 | 10 | 70 | 0 | 0.983 | 1.161 | 0.4 | 14.4 | 474 |
| Ex. 36 | 50 | 40 | 10 | 50 | 0 | 0.964 | 1.185 | 0.3 | 11.2 | 339 |
| Ex. 37 | 70 | 60 | 10 | 30 | 0 | 0.945 | 1.190 | 0.1 | 8.0 | 204 |
| Ex. 38 | 90 | 80 | 10 | 10 | 0 | 0.929 | 1.167 | 0.0 | 5.0 | 69 |
| Ex. 39 | 30 | 20 | 10 | 0 | 70 | 0.933 | 0.893 | 0.8 | -9.6 | 2451 |
| Ex. 40 | 50 | 40 | 10 | 0 | 50 | 0.927 | 0.977 | 0.7 | -5.8 | 1751 |
| Ex. 41 | 70 | 60 | 10 | 0 | 30 | 0.924 | 1.051 | 0.4 | -2.2 | 1051 |
| Ex. 42 | 90 | 80 | 10 | 0 | 10 | 0.923 | 1.115 | 0.1 | 1.6 | 351 |
| Ex. 43 | 30 | 20 | 10 | 20 | 50 | 0.958 | 1.006 | 0.8 | -3.2 | 1886 |
| Ex. 44 | 50 | 40 | 10 | 20 | 30 | 0.948 | 1.084 | 0.5 | 0.7 | 1186 |
| Ex. 45 | 70 | 60 | 10 | 20 | 10 | 0.940 | 1.152 | 0.2 | 4.5 | 486 |
| Ex. 46 | 30 | 20 | 10 | 40 | 30 | 0.974 | 1.086 | 0.6 | 3.5 | 1321 |
| Ex. 47 | 50 | 40 | 10 | 40 | 10 | 0.961 | 1.158 | 0.3 | 7.6 | 621 |
| Ex. 48 | 30 | 20 | 10 | 60 | 10 | 0.981 | 1.141 | 0.4 | 10.7 | 756 |

As shown in Tables 3 to 6, the working fluids in Ex. 13 to 48 containing HFO-1123 and HFO-1132 and containing at least one of HFC-32 and HFC-125, have favorable coefficient of performance and refrigerating capacity relative to R410A and have a small temperature glide. Particularly the working fluids in Ex. 13 to 19, 21 to 27 and 29 to 48 having 1132/working fluid of at least 10 mass% and at most 43 mass%, have a very small temperature glide of at most 1°C and are excellent in the energy efficiency. Further, the working fluids in Ex. 21 to 34 and 39 to 48 containing HFC-125 generally have a low discharge temperature.

[Ex. 49]

As Ex. 49, with respect to R410A (a mixed fluid of HFC-32 and HFC-125 in a mass ratio of 1:1) as a basis of relative comparison in Ex. 1 to 48, the refrigerating cycle performance (refrigerating capacity and coefficient of performance), the temperature glide and the discharge temperature were measured in the same manner as above. The refrigerating capacity and the coefficient of performance were 1.000 as shown in Table 7. The calculation results of the temperature glide and GWP are shown in Table 7.

[Table 7]

| | Working fluid composition [mass%] | | Relative performance (based on R410A) | | Temperature glide | Discharge temperature difference ΔT | GWP |
|---|---|---|---|---|---|---|---|
| | HFC-125 | HFC-32 | COP | Capacity | [°C] | [°C] | |
| Ex. 49 (R410A) | 50 | 50 | 1.000 | 1.000 | 0.2 | 0.0 | 2088 |

[Ex. 50 to 55]

In Ex. 50 to 55, a working fluid was prepared by mixing HFO-1123, HFC-32 and HFC-125 in a proportion as identified in Table 8.

Of the obtained working fluid, the refrigerating cycle performance (refrigerating capacity Q and coefficient of performance COP), the temperature glide and the discharge temperature were measured in the same manner as above. The measurement and evaluation results of the refrigerating capacity (based on R410A) and the coefficient of performance (based on R410A), and the measurement results of the temperature glide and the discharge temperature difference are shown in Table 8 together with the calculation results of GWP.

[Table 8]

| | | | | | Evaluation | | | | |
|---|---|---|---|---|---|---|---|---|---|
| | 1123+1132 | HFO-1123 | HFC-32 | HFC-125 | Relative COP | Relative capacity | Temperature glide [°C] | Discharge temperature difference ΔT [°C] | GWP |
| Ex. 50 | 20 | 20 | 20 | 60 | 0.960 | 0.968 | 0.9 | -5.7 | 2235 |
| Ex. 51 | 40 | 40 | 20 | 40 | 0.949 | 1.051 | 0.8 | -1.7 | 1535 |
| Ex. 52 | 60 | 60 | 20 | 20 | 0.940 | 1.125 | 0.4 | 2.1 | 835 |
| Ex. 53 | 20 | 20 | 40 | 40 | 0.979 | 1.053 | 0.7 | 1.0 | 1670 |
| Ex. 54 | 40 | 40 | 40 | 20 | 0.965 | 1.130 | 0.6 | 5.1 | 970 |
| Ex. 55 | 20 | 20 | 60 | 20 | 0.988 | 1.111 | 0.6 | 8.1 | 1105 |

As evident from Table 8, the working fluids in Ex. 50 to 55 containing HFO-1123, HFC-32 and HFC-125 have favorable coefficient of performance and refrigerating capacity relative to R410A and have a small temperature glide.

The working fluid of the present invention is useful as a refrigerant for an air-conditioning apparatus (such as a built-in showcase, a separate showcase, an industrial fridge freezer, a vending machine or an ice making machine), a refrigerant for an air-conditioning apparatus (such as a room air-conditioner, a store package air-conditioner, a building package air-conditioner, a plant package air-conditioner, a gas engine heat pump, a train air-conditioning system or an automobile air-conditioning system), a working fluid for a power generation system (such as exhaust heat recovery power generation), a working fluid for a heat transport apparatus (such as a heat pipe) or a secondary cooling fluid.

REFERENCE SYMBOLS

10: refrigerating cycle system, 11: compressor, 12: condenser, 13: expansion valve, 14: evaporator, 15, 16: pump, A,B: vapor of working fluid for heat cycle, C,D: working fluid for heat cycle, E, E': load fluid, F: fluid

**Claims**

1. A working fluid for heat cycle, which contains trifluoroethylene and 1,2-difluoroethylene, wherein the proportion of 1,2-difluoroethylene based on the entire amount of the working fluid for heat cycle is at least 10 mass%.

2. The working fluid for heat cycle according to Claim 1, wherein the proportion of the total amount of trifluoroethylene and 1,2-difluoroethylene based on the entire amount of the working fluid for heat cycle is at least 20 mass% and at most 100 mass%.

3. The working fluid for heat cycle according to Claim 1 or 2, wherein the proportion of trifluoroethylene based on the entire amount of the working fluid for heat cycle is at least 57 mass% and at most 90 mass%.

4. The working fluid for heat cycle according to any one of Claims 1 to 3, wherein the proportion of 1,2-difluoroethylene based on the entire amount of the working fluid for heat cycle is at most 43 mass%.

5. The working fluid for heat cycle according to any one of Claims 1 to 4, which further contains difluoromethane.

6. The working fluid for heat cycle according to Claim 5, wherein the proportion of difluoromethane based on the entire amount of the working fluid for heat cycle is at least 10 mass% and at most 60 mass%.

7. The working fluid for heat cycle according to any one of Claims 1 to 4, which further contains pentafluoroethane.

8. The working fluid for heat cycle according to Claim 7, wherein the proportion of pentafluoroethane based on the entire amount of the working fluid for heat cycle is at least 15 mass% and at most 60 mass%.

9. The working fluid for heat cycle according to any one of Claims 1 to 4, which further contains difluoromethane and pentafluoroethane.

10. The working fluid for heat cycle according to Claim 9, wherein the proportion of the total amount of difluoromethane and pentafluoroethane based on the entire amount of the working fluid for heat cycle is at least 35 mass% and at most 60 mass%.

11. A composition for a heat cycle system, which comprises the working fluid for heat cycle as defined in any one of Claims 1 to 10, and a refrigerant oil.

12. A heat cycle system, which employs the composition for a heat cycle system as defined in Claim 11.

13. The heat cycle system according to Claim 12, which is a refrigerating apparatus, an air-conditioning apparatus, a power generation system, a heat transport apparatus or a secondary cooling machine.

14. The heat cycle system according to Claim 13, which is a room air-conditioner, a store package air-conditioner, a building package air-conditioner, a plant package air-conditioner, a gas engine heat pump, a train air-conditioning system, an automobile air-conditioning system, a built-in showcase, a separate showcase, an industrial fridge freezer, an ice making machine or a vending machine.

**EP 3 121 242 B1**

**Patentansprüche**

1. Arbeitsmedium für einen Wärmekreislauf, das Trifluorethylen und 1,2-Difluorethylen enthält, wobei der Anteil von 1,2-Difluorethylen, bezogen auf die Gesamtmenge des Arbeitsmediums für einen Wärmekreislauf, mindestens 10 Massen-% beträgt.

2. Arbeitsmedium für einen Wärmekreislauf nach Anspruch 1, wobei der Anteil der Gesamtmenge an Trifluorethylen und 1,2-Difluorethylen, bezogen auf die Gesamtmenge des Arbeitsmediums für einen Wärmekreislauf, mindestens 20 Massen-% und höchstens 100 Massen-% beträgt.

3. Arbeitsmedium für einen Wärmekreislauf nach Anspruch 1 oder 2, wobei der Anteil von Trifluorethylen, bezogen auf die Gesamtmenge des Arbeitsmediums für einen Wärmekreislauf, mindestens 57 Massen-% und höchstens 90 Massen-% beträgt.

4. Arbeitsmedium für einen Wärmekreislauf nach einem der Ansprüche 1 bis 3, wobei der Anteil von 1,2-Difluorethylen, bezogen auf die Gesamtmenge des Arbeitsmediums für einen Wärmekreislauf, höchstens 43 Massen-% beträgt.

5. Arbeitsmedium für einen Wärmekreislauf nach einem der Ansprüche 1 bis 4, das weiter Difluormethan enthält.

6. Arbeitsmedium für einen Wärmekreislauf nach Anspruch 5, wobei der Anteil von Difluormethan, bezogen auf die Gesamtmenge des Arbeitsmediums für einen Wärmekreislauf, mindestens 10 Massen-% und höchstens 60 Massen-% beträgt.

7. Arbeitsmedium für einen Wärmekreislauf nach einem der Ansprüche 1 bis 4, das weiter Pentafluorethan enthält.

8. Arbeitsmedium für einen Wärmekreislauf nach Anspruch 7, wobei der Anteil von Pentafluorethan, bezogen auf die Gesamtmenge des Arbeitsmediums für einen Wärmekreislauf, mindestens 15 Massen-% und höchstens 60 Massen-% beträgt.

9. Arbeitsmedium für einen Wärmekreislauf nach einem der Ansprüche 1 bis 4, das weiter Difluormethan und Pentafluorethan enthält.

10. Arbeitsmedium für einen Wärmekreislauf nach Anspruch 9, wobei der Anteil der Gesamtmenge an Difluormethan und Pentafluorethan, bezogen auf die Gesamtmenge des Arbeitsmediums für einen Wärmekreislauf, mindestens 35 Massen-% und höchstens 60 Massen-% beträgt.

11. Zusammensetzung für ein Wärmekreislaufsystem, die das Arbeitsmedium für einen Wärmekreislauf nach einem der Ansprüche 1 bis 10 und ein Kältemittelöl umfasst.

12. Wärmekreislaufsystem, das die Zusammensetzung für ein Wärmekreislaufsystem nach Anspruch 11 verwendet.

13. Wärmekreislaufsystem nach Anspruch 12, das eine Kühlvorrichtung, eine Klimaanlage, ein Energieerzeugungssystem, eine Wärmetransportvorrichtung oder eine Sekundärkühlungsmaschine ist.

14. Wärmekreislaufsystem nach Anspruch 13, das eine Raumklimaanlage, eine Ladenkompaktklimaanlage, eine Gebäudekompaktklimaanlage, eine Anlagenkompaktklimaanlage, eine Gasmotorwärmepumpe, ein Zugklimaanlagensystem, ein Autoklimaanlagensystem, eine Einbauvitrine, eine separate Vitrine, eine Industriegefrierkombination, eine Eisherstellungsmaschine oder ein Warenautomat ist.

**Revendications**

1. Fluide moteur pour cycle thermique, qui contient du trifluoroéthylène et du 1,2-difluoroéthylène, dans lequel la proportion de 1,2-difluoroéthylène basée sur la quantité totale du fluide moteur pour cycle thermique est d'au moins 10 % en masse.

2. Fluide moteur pour cycle thermique selon la revendication 1, dans lequel la proportion de la quantité totale de trifluoroéthylène et de 1,2-difluoroéthylène basée sur la quantité totale du fluide moteur pour cycle thermique est

**20**

d'au moins 20 % en masse et d'au plus 100 % en masse.

3. Fluide moteur pour cycle thermique selon la revendication 1 ou 2, dans lequel la proportion de trifluoroéthylène basée sur la quantité totale du fluide moteur pour cycle thermique est d'au moins 57 % en masse et d'au plus 90 % en masse.

4. Fluide moteur pour cycle thermique selon l'une quelconque des revendications 1 à 3, dans lequel la proportion de 1,2-difluoroéthylène basée sur la quantité totale du fluide moteur pour cycle thermique est d'au plus 43 % en masse.

5. Fluide moteur pour cycle thermique selon l'une quelconque des revendications 1 à 4, qui contient en outre du difluorométhane.

6. Fluide moteur pour cycle thermique selon la revendication 5, dans lequel la proportion de difluorométhane basée sur la quantité totale du fluide moteur pour cycle thermique est d'au moins 10 % en masse et d'au plus 60 % en masse.

7. Fluide moteur pour cycle thermique selon l'une quelconque des revendications 1 à 4, qui contient en outre du pentafluoroéthane.

8. Fluide moteur pour cycle thermique selon la revendication 7, dans lequel la proportion de pentafluoroéthane basée sur la quantité totale du fluide moteur pour cycle thermique est d'au moins 15 % en masse et d'au plus 60 % en masse.

9. Fluide moteur pour cycle thermique selon l'une quelconque des revendications 1 à 4, qui contient en outre du difluorométhane et du pentafluoroéthane.

10. Fluide moteur pour cycle thermique selon la revendication 9, dans lequel la proportion de la quantité totale de difluorométhane et de pentafluoroéthane basée sur la quantité totale du fluide moteur pour cycle thermique, est d'au moins 35 % en masse et d'au plus 60 % en masse.

11. Composition pour un système de cycle thermique, qui comprend le fluide moteur pour cycle thermique tel que défini dans l'une quelconque des revendications 1 à 10, et une huile réfrigérante.

12. Système de cycle thermique, qui emploie la composition pour un système de cycle thermique telle que définie dans la revendication 11.

13. Système de cycle thermique selon la revendication 12, qui est un dispositif réfrigérant, un dispositif de climatisation, un système de production d'énergie, un dispositif de transport de chaleur ou une machine de refroidissement secondaire.

14. Système de cycle thermique selon la revendication 13, qui est un climatiseur individuel, un climatiseur autonome de magasin, un climatiseur autonome d'immeuble, un climatiseur autonome d'usine, une pompe à chaleur pour moteur à gaz, un système de climatisation de train, un système de climatisation d'automobile, un présentoir intégré, un présentoir séparé, un réfrigérateur congélateur industriel, une machine à glaçons ou un distributeur automatique.

## Fig. 1

## Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4110388 A
- JP 2006512426 A
- WO 2012157764 A
- US 4249412 A
- JP 10502737 A
- JP 2007511645 A
- JP 2008500437 A
- JP 2008531836 A